# EUROPEAN PATENT SPECIFICATION

(11) **EP 2 690 560 B1**
(45) Date of publication and mention of the grant of the patent: **25.10.2017**
(21) Application number: 13157494.9
(22) Date of filing: 01.03.2013
(51) Int. Cl.: G06F 11/34, G06F 11/36, H04L 12/26, G06F 11/30

(54) **Method of benchmarking the behaviour of a replacement information system with the old system**
Verfahren zum Vergleichen des Verhaltens eines Ersatzsdatenverarbeitungssystem mit dem zu ersetzenden System
Procédé de comparaison du comportement d'un système de traitement de données de remplacement avec le système remplacé

(30) Priority: 27.07.2012 JP 2012166503
(43) Date of publication of application: 29.01.2014
(73) Proprietor: Hitachi, Ltd., Tokyo 100-8280 (JP)
(72) Inventor: Tanaka, Shuichi, Chiyoda-ku, Tokyo 100-8220 (JP); Mimura, Masahiro, Chiyoda-ku, Tokyo 100-8220 (JP); Nagasuka, Hirofumi, Chiyoda-ku, Tokyo 100-8220 (JP); Jin, Yusuke, Chiyoda-ku, Tokyo 100-8220 (JP); Muratani, Hiroaki, Chiyoda-ku, Tokyo 100-8220 (JP); Ishiai, Hideki, Chiyoda-ku, Tokyo 100-8220 (JP)
(74) Representative: Moore, Graeme Patrick

(56) References cited:
- US-A1- 2008 097 961
- US-A1- 2012 005 175
- US-A1- 2012 158 895

## Description

### FIELD OF THE INVENTION

The present invention relates to a technology for comparing process contents in two or more information systems. More particularly, the present invention relates to a test transition assistance method and system capable of supporting an old and new verification test, a load test, and the like, for the transition of information systems from a current system to a new system, and thus assisting the transition.

### BACKGROUND OF THE INVENTION

The information communication technology including the packet capture technology has been developed in a variety of ways along with the information system which is the core of the information processing technology. Nowadays, the information communication technology and the information processing technology are inseparable.

Further, Japanese Unexamined Patent Publication No. Hei 8-249279 (1996-249279) describes an "online system" as a technology for comparing the outputs (or process contents) of two or more information systems for test transition assistance or other supports in transition from a current system to a new system. This online system aims to reduce the number of man hours for testing, correctly compare the test results in the transition between current and target host computers, and perform a test of the target host computer in a 24-hour online system.

The existing technology for comparing the outputs of information systems such as the test transition assistance technology is based on the online comparison or test in real time, which does not support an old and new verification test in non-real time by using the storage memory or a load test with the load other than the current load. Further, in Japanese Unexamined Patent Publication No. Hei 8-249279, it is described a method for distributing the data of a terminal to the current host computer and to the target host computer, respectively. However, detailed steps are outside of the scope of this technology.
US Patent Application, Publication number 2012/0158895 A1 shows a testing apparatus, testing method and computer-readable storage medium.
US Patent Application, Publication number 2012/005175 A1 shows a method and system for real time replaying of database workload at a fixed initial time delay. US Patent Application, Publication number 2008/0097961 A1 shows capturing database workload while preserving original transactional and concurrency characteristics for replay.

### SUMMARY OF THE INVENTION

An object of the present invention is to perform a non-real-time process to effectively compare the results of two or more information systems. For example, it is desirable to provide a method and system, based on the non-real-time test, capable of supporting an old and new verification test, a load test, and the like, for the transition from a current system to a new system in order to reduce the number of days and man-hours and improve the quality, and thus assisting the transition.

The present invention provides a test transition assistance method according to claim 1 and a test transition assistance system according to claim 6.

According to the present invention, it is possible to easily compare the output results of two of more information systems. As an example, in order to reduce the number of days and man-hours and improve the quality, it is possible to perform an old and new verification test, a load test, and the like, for the transition from a current system to a new system, and thus assisting the transition.

### BRIEF DESCRIPTION OF THE DRAWINGS

Fig. 1 is an overall system block diagram showing the implementation method of test transition assistance according to an embodiment of the present invention;
Fig. 2 is a process flow chart schematically showing the implementation method of the test transmission assistance according to an embodiment of the present invention;
Fig. 3 is a detailed message read and process flow chart showing the details of the message read and process in the implementation method of the test transmission assistance according to an embodiment of the present invention;
Fig. 4 is a detailed message comparison flow chart showing the details of the message comparison in the implementation method of the test transition assistance according to an embodiment of the present invention;
Fig. 5 is an example of the request message information of a current system according to an embodiment of the present invention;
Fig. 6 is an example of the response message information of a new system according to an embodiment of the present invention;
Fig. 7 is an example of the message read setting of a test transition assistance system according to an embodiment of the present invention;
Fig. 8 is an example of the message process setting of the test transition assistance system according to an embodiment of the present invention;
Fig. 9 is an example of the message conversion table of the test transition assistance system according to an embodiment of the present invention;
Fig. 10 is an example of the message comparison setting of the test transition assistance system according to an embodiment of the present invention;
Fig. 11 is an example when one message difference in the comparison of one message time and a plurality of the message times is large, and the number of data pieces is also large, in the message comparison results of the test transition assistance system according to an embodiment of the present invention;
Fig. 12 is an example when one message difference in the comparison of one message time and a plurality of message times is small, and the number of data pieces is also small, in the message comparison results of the test transition assistance system according to an embodiment of the present invention; and
Fig. 13 is an example of the comparison of a plurality of message relations in the message comparison results of the test transition assistance system according to an embodiment of the present invention.

### DETAILED DESCRIPTION OF THE PREFERRED EMBODIMENTS

In the test transition assistance, there is provided a test transition assistance system, based on the non-real-time test, capable of supporting an old and new verification test, a load test, and the like, for the transition from a current system to a new system, in order to reduce the number of days and man-hours and to improve the quality, and thus assisting the transition. The test transition assistance system includes the steps of: acquiring a request message and a response message from the current system by a packet capture and the like; applying a process such as addition of an identifier and acquisition time; storing the message information in a storage and the like; applying processes such as reading of the stored message information, conversion of the message corresponding to the new system, and adjustment of the time to control the number of request messages per load and per unit time in non-real time; transmitting a request message to the new system; receiving a response message; and comparing old and new response messages and response times, as well as a plurality of message relations and orders, or other information. Note that in this embodiment, the comparison is performed between two systems of one current system and one new system. However, it is also possible to compare three or more systems (for example, one current system and two or more new systems).

Hereinafter, an embodiment for implementing the present invention will be described with reference to the drawings.

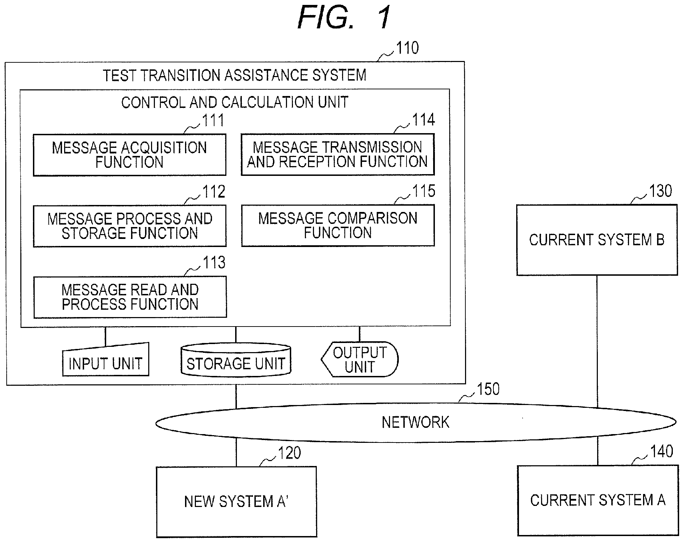

Fig. 1 is an overall system block diagram of a test transition assistance method and system according to the present invention.

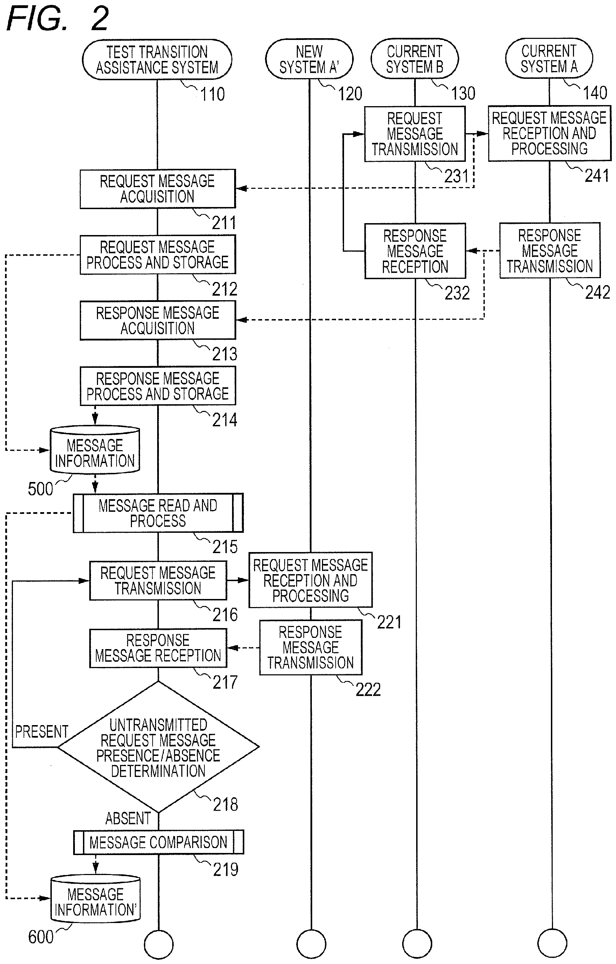

Fig. 2 shows a test transition assistance system of the test transition assistance method and system according to an embodiment of the present invention. Fig. 2 is a flow chart schematically showing the process of the test transition assistance system. The test transition assistance system includes the steps of: acquiring a request message and a response message from a current system by a packet capture and the like; applying a process such as addition of an identifier and acquisition time; storing the message information in a storage and the like; applying processes, in non-real time, such as reading of the stored message information, conversion of the message corresponding to the new system, and adjustment of the time to control the number of request message transmissions per load and per unit time; transmitting a request message to the new system; receiving a response message; and comparing old and new response messages and response times, as well as a plurality of message relations and orders, or other information. Thus, in the test transition assistance, based on the non-real-time test, the process according to this embodiment can support an old and new verification test, a load test, and the like, for the transition from the current system to the new system in order to reduce the number of days and man-hours and to improve the quality, and thus assist the transition.

First, the overall system configuration of the test transition assistance method and system shown in Fig. 1 will be described.

The test transition assistance method and system is configured by including a test transition assistance system 110, a new system A' 120, a current system B 130, a current system A 140, and a network 150 that connects these systems.

The test transition assistance system 110 is a computer including: a message acquisition function 111 for acquiring a request message and a response message from the network 150 between the current system B 130 and the current system A 140; a message process and storage function 112 for processing and storing the request message and the response message; a message read and process function 113 for reading and processing the stored message information; a message transmission and reception function 114 for transmitting a request message to the new system A' 120 and receiving a response message from the new system; and a message comparison function 115 for comparing the old and new messages.

The new system A' 120 and the current system A 140 are computers each having a request message reception and process function for receiving and processing the request message, as well as a response message transmission function for transmitting the response message.

The current system B 130 is a computer having a request message transmission function for transmitting a request message, and a response message reception function for receiving the response message.

Computers constituting the test transition assistance system 110, the new system A' 120, the current system B 130, and the current system A 140 include: a control and calculation unit that operates according to a program, a storage unit for storing data, files, and programs that can be accessed from the control and calculation unit; a communication unit for transmitting and receiving data and files through other computers, networks, and the like; an input unit for further receiving instruction from the user; and a display unit for displaying the process results of the control and calculation unit, and the like. The control and operation unit operates by accessing the data and file in the storage according to the program. Thus, each of the functions is achieved.

The test transition assistance system 110 is preferably a computer that can perform the steps of: acquiring a request message and a response message from the current system by a packet capture and the like; applying a process such as addition of an identifier and acquisition time; storing the message information in a storage and the like; applying processes, in non-real time, such as reading of the stored message information, conversion of the message corresponding to the new system, and adjustment of the time to control the number of request message transmissions per load and per unit time; transmitting a request message to the new system; receiving a response message; and comparing the old and new response messages and response times, a plurality of message relations and orders or other information. More specifically, a large computer or a high performance workstation is preferred.

The new system A' 120, the current system B 130, and the current system A 140 are preferably computers with the capability to process a variety of information. More specifically, a small computer is preferred for the client, and a large computer or high performance workstation is preferred for the server.

The network 150 can be any type of transmission media that can transmit information to other computers.

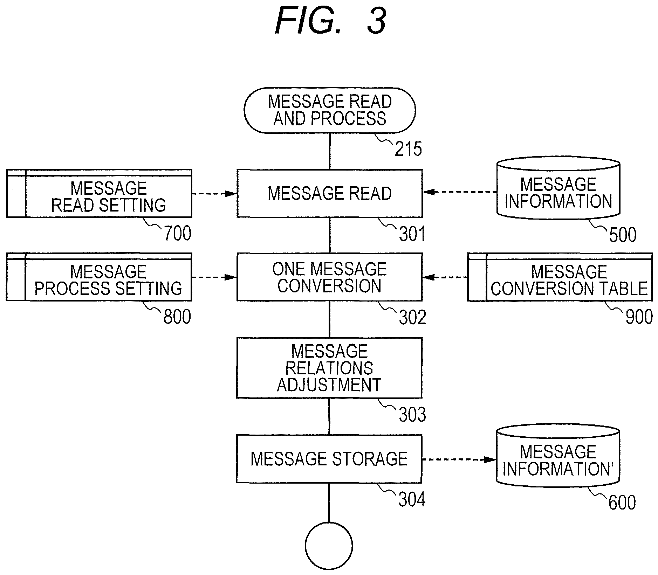

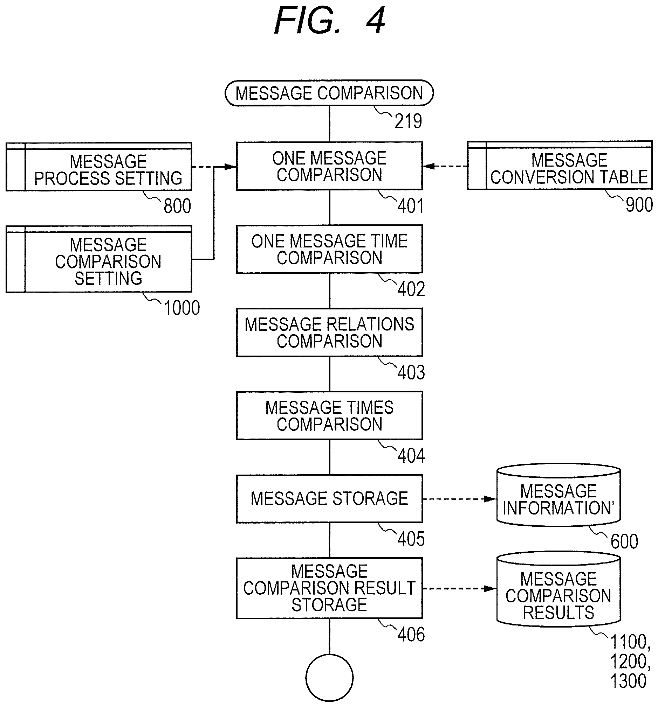

Hereinafter, the process operation in a preferred embodiment for implementing the present invention will be described with reference to the following drawings. Fig. 1 is an overall system block diagram, Fig. 2 is a general process flow chart, Fig. 3 is a detailed message read and process flow chart, and Fig. 4 is a detailed message comparison flow chart. Here, online trading is taken as an example, and it is assumed that the current system B 130 is a Web client of a securities company, and the new system A' 120 and the current system A 140 are online trading systems.

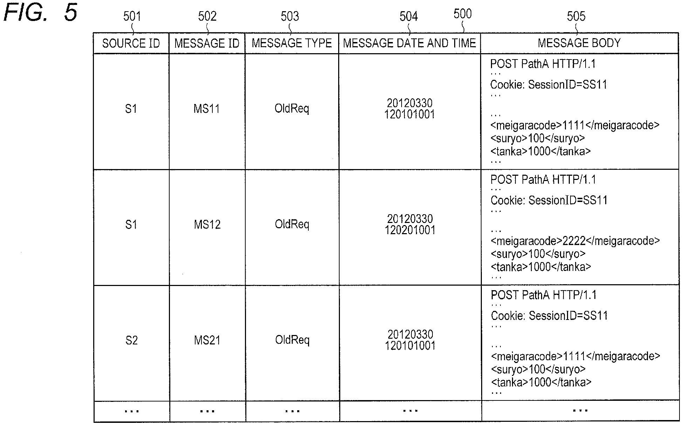

Fig. 5 is an example of request message information 500 of the current online trade system which is the current system A 140. This example includes a source ID 501, a message ID 502, a message type 503, a message date and time 504, and a message body 505. The message type includes a current request (OldReq), a current response (OldRes), a new request (NewReq), and a new response (NewRes). The message date and time represents the acquisition date and time or the transmission/reception date and time.

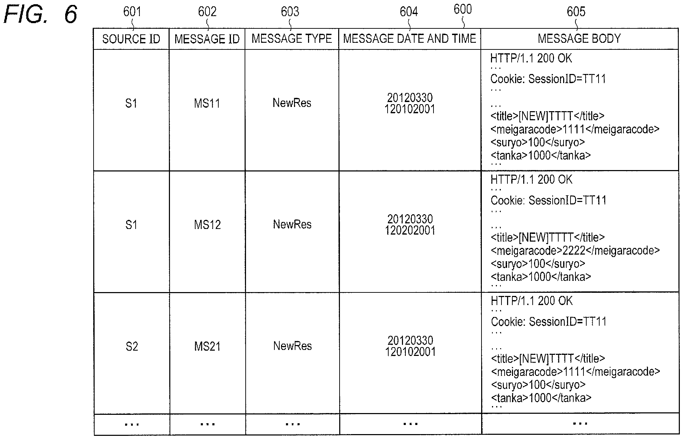

Fig. 6 is an example of response message information 600 of the new online trade system which is the new system A' 120. This example includes the same items as those in the request message information 500.

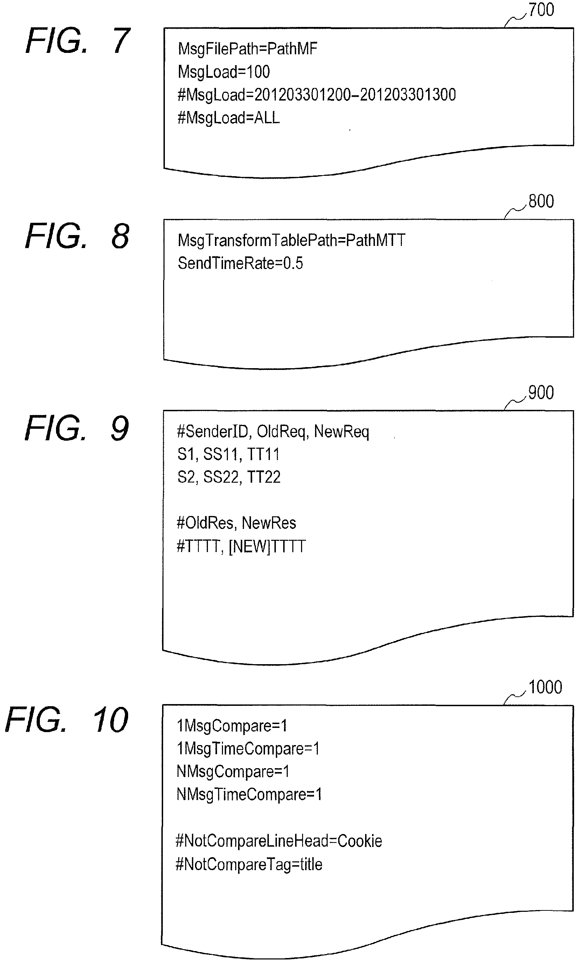

Fig. 7 is an example of a message read setting 700 of the test transition assistance system 110. In this example, "PathMF" is set to the message file pass (MsgFilePath), "100" is set to the number of message reads (MsgLoad). In addition, other settings such as the range of dates and times of the message reads (201203301200-201203301300) and "ALL" can also be set in the message read setting 700.

Fig. 8 is an example of a message process setting 800 of the test transition assistance system 110. In this example, "PathMTT" is set to the message conversion table pass (MsgTransformTable), and "0.5" is set to the transmission time rate (SendTimeRate).

Fig. 9 is an example of a message conversion table 900 of the test transition assistance system 110. In this example, the string conversions of the current request message (OldReq) and the new request message (NewReq) are set for each source ID (SenderID). In addition, other settings such as the string conversions of the current response message (OldRes) and the new response message (NewRes) can also be set in the message conversion table 900.

Fig. 10 is an example of a message comparison setting 1000 of the test transition assistance system 110. In this example, "necessary (1)" is set to the determination of presence or absence of one message comparison (1MsgCompare), one message time comparison (1MsgTimeCompare), comparison of a plurality of message relations (NMsgCompare), and comparison of a plurality of message times (NMsgTimeCompare). In addition, other settings such as line head string
(NotCompareLineHead=Cookie) and tag (NotCompareTag=title), which are not to be compared, can also be set in the message comparison setting 1000.

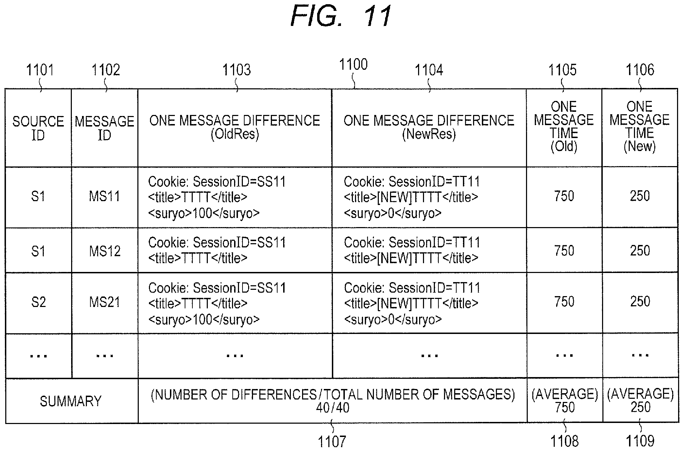

Fig. 11 is an example of a message comparison result 1100 when one message difference in the comparison of one message time and a plurality of message times is large, and the number of data pieces is also large, in the message comparison results of the test transition assistance system 110. This example includes a source ID 1101, a message ID 1102, one message difference (OldRes) 1103, one message difference (NewRes) 1104, one message time (Old) 1105, one message time (New) 1106, a summary of one message difference (number of differences/total number of messages) 1107, a summary of one message time (Old) (average) 1108, and a summary of one message time (New) (average) 1109.

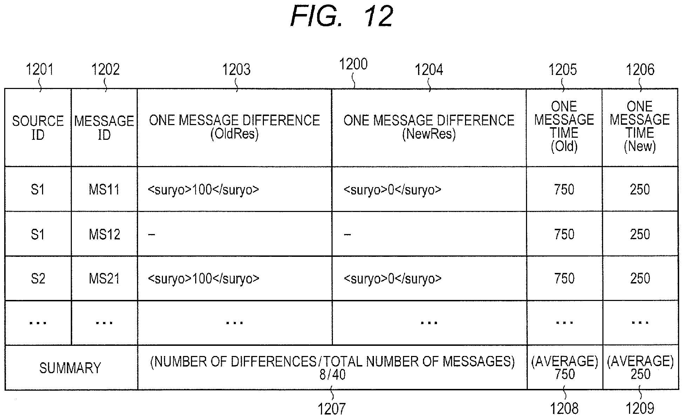

Fig. 12 is an example of a message comparison result 1200 when one message difference in the comparison of one message time and a plurality of message times is small, and the number of data pieces is also small, in the message comparison results of the test transition assistance system 110. This example includes the same items as those of the message comparison result 1100.

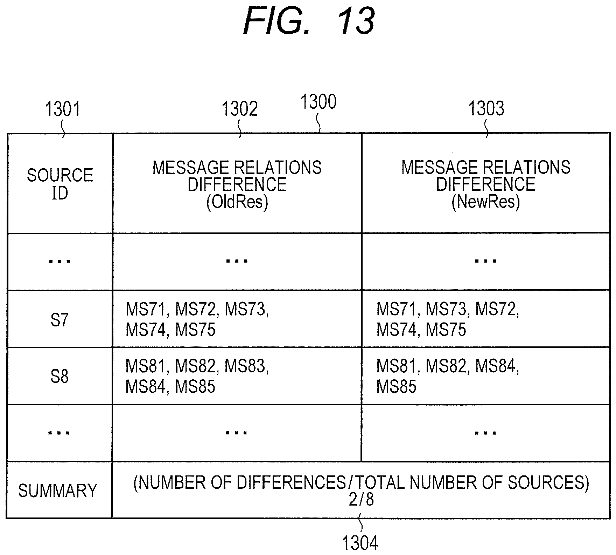

Fig. 13 is an example of a message comparison result 1300 of the comparison of a plurality of message relations in the message comparison results of the test transition assistance system 110. This example includes a source ID 1301, a difference in a plurality of message relations (OldRes) 1302, a difference in a plurality of message relations (NewRes) 1303, and a summary of the difference in a plurality of message relations (the number of differences/the total number of sources) 1304.

### <Step 231> Request message transmission

The request message transmission function of the current system B 130 transmits a current request message to the current system A 140.

In the example of the online trade, it is assumed that the request message transmission function of the Web client, which is the current system B 130, transmits a current request message to the current online trade system which is the current system A 140. More specifically, in the case of an order request message, it includes the session ID, the stock code, the figure, and the unit price. However, the message may not include all of the information.

### <Step 241> Request message reception and processing

The request message reception and processing function of the current system A 140 receives and processes the current request message from the current system B 130.

In the example of the online trade, it is assumed that the request message reception and processing function of the current online trade system, which is the current system A 140, receives and processes the current request message from the Web client which is the current system B 130. More specifically, in the case of an order request message, the request message reception and processing function of the current online trade system processes the order reception based on the session ID, the stock code, the figure, and the unit price or other information.

### <Step 211> Request message acquisition

The message acquisition function 111 of the test transition assistance system 110 acquires the current request message from the current system B 130 to the current system A 140 by a packet capture and the like.

In the example of the online trade, it is assumed that the message acquisition function 111 of the test transition assistance system 110 acquires the current request message by a packet capture and the like from the Web client, which is the current system B 130, to the current online trade system which is the current system A 140. More specifically, in the case of an order request message, it includes the session ID, the stock code, the figure, and the unit price or other information. However, the message may not include all of the information.

### <Step 212> Request message process and storage

The message process and storage function 112 of the test transition assistance system 110 adds the source ID 501, the message ID 502, the message type 503, and the message date and time 504 to the current request message body 505 from the current system B 130 to the current system A 140, which is acquired by a packet capture and the like. Then, the message process and storage function 112 of the test transition assistance system 110 stores the particular message in a storage, and the like, as the message information 500.

In the example of the online trade, it is assumed that the message process and storage function 112 of the test transition assistance system adds the transmission source ID 501, the message ID 502, the message type 503, and the message date and time 504 to the current request message body 505 that is acquired by a packet capture, and the like, from the Web client, which is the current system B 130, to the current online trade system which is the current system A 140. Then, the message process and storage function of the test transition assistance system stores the particular message in the storage, and the like, as the message information 500.

### <Step 242> Response message transmission

The response message transmission function of the current system A 140 transmits the current response message to the current system B 130.

In the example of the online trade, it is assumed that the response message transmission function of the current online trade system, which is the current system A 140, transmits the current response message to the Web client which is the current system B 130. More specifically, in the case of an order reception response message, it includes the session ID, the stock code, the figure, and the unit price or other information. However, the message may not include all of the information.

### <Step 232> Response message reception

The response message reception function of the current system B 130 receives the current response message from the current system A 140, and returns to <Step 231>.

In the example of the online trade, it is assumed that the response message reception function of the Web client, which is the current system B 130, receives the current response message from the current online trade system which is the current system A 140, and returns to the next current request message transmission.

### <Step 213> Response message acquisition

The message acquisition function 111 of the test transition assistance system 110 acquires the current response message by a packet capture, and the like, from the current system A 140 to the current system B 130.

In the example of the online trade, it is assumed that the message acquisition function 111 of the test transition assistance system 110 acquires the current response message by a packet capture, and the like, from the current online trade system which is the current system A 140, to the Web client which is the current system B 130. More specifically, in the case of an order reception response message, it includes the session ID, the stock code, the figure, and the unit price or other information. However, the message may not include all of information.

### <Step 214> Response message process and storage

The message process and storage function 112 of the test transition assistance system 110 adds the transmission source ID 501, the message ID 502, the message type 503, and the message date and time 504 to the current response message body 505 that is acquired by a packet capture, and the like, from the current system A 140 to the current system B 130. Then, the message process and storage function 112 of the test transition assistance system 110 stores the particular message in the storage, and the like, as the message information 500.

In the example of the online trade, it is assumed that the message process and storage function 112 of the test transition assistance system adds the source ID 501, the message ID 502, the message type 503, and the message date and time 504 to the current response message body 505 that is acquired by a packet capture, and the like, from the current online trade system, which is the current system A 140, to the Web client which is the current system B 130. Then, the message process and storage function 112 of the test transition assistance system stores the particular message in the storage, and the like, as the message information 500.

### <Step 215> Message read and process

Hereinafter, the message read and process 215 will be described using the detailed message read and process flow chart shown in Fig. 3.

### <Step 301> Message read

The message read and process function 113 of the test transition assistance system 110 reads the current request message and the current response message based on the message read setting 700.

In the example of the online trade, it is assumed that the message read and process function 113 of the test transition assistance system 110 reads 100 order request messages and 100 order reception response messages, respectively, based on the message file path "PathMF" and the number of message reads "100" that are set in the message read setting 700.

### <Step 302> One message conversion

The message read and process function 113 of the test transition assistance system 110 converts the current request message into a new request message based on the message process setting 800 and on the message conversion table 900.

In the example of the online trade, it is assumed that the message read and process function 113 of the test transition assistance system 110 refers to the message conversion table 900, based on the message conversion table path "PathMTT" in the message process setting 800. Then, the message read and process function 113 of the test transition assistance system 110 converts the string "SS11" in the current request message corresponding to the source ID "S1" into "TT11" to generate a new request message. This is the same for the transmission source ID "S2" and other transmission source IDs. Further, although commented out with (#) in the message conversion table 900, it is also possible to set the conversion of the current response message and the new response message. In this case, the new response message that has been converted, and the new response message that is the response from the new system A' 120 are separately managed and compared.

### <Step 303> Adjustment of a plurality of message relations

The message read and process function 113 of the test transition assistance system 110 adjusts a plurality of relations between the current request messages and the current response messages, based on the message process setting 800 and on the message conversion table 900.

In the example of the online trade, it is assumed that the message read and process function 113 of the test transition assistance system 110 sorts the message dates and times of the current request messages, and adjusts the transmission interval to 0.5 times smaller than the initial value based on the transmission time rate "0.5" in the message process setting 800. In this way, the message read and process function 113 generates the new request messages.

### <Step 304> Message storage

The message read and process function 113 of the test transition assistance system 110 stores the new request messages and the new response messages after the one message conversion and the adjustment of a plurality of message relations, in the storage and the like as message information' 600.

In the example of the online trade, it is assumed that the message read and process function 113 of the test transition assistance system 110 converts the string in the current request message according to the source ID in the one message conversion, sorts the message dates and times of the current request messages in the adjustment of a plurality of message relations, adjusts the transmission interval, and stores the new request messages with the adjusted transmission interval in the storage, and the like, as the message information' 600.

Returning to Fig. 2, the rest of the processing operation will be described below.

### <Step 216> Request message transmission

The message transmission and reception function 114 of the test transition assistance system 110 transmits the new request message to the new system A' 120.

In the example of the online trade, it is assume that the message transmission and reception function 114 of the test transition assistance system 110 transmits the new request message to the new online trade system which is the new system A' 120. More specifically, in the case of an order request message, it includes the session ID, the stock code, the figure, and the unit price or other information. However, the message may not include all of the information.

### <Step 221> Request message reception and processing

The request message reception and processing function of the new system A' 120 receives and processes the new request message from the test transition assistance system 110.

In the example of the online trade, it is assumed that the request message reception and processing function of the new online trade system, which is the new system A' 120, receives and processes the new request message from the test transition assistance system 110. More specifically, in the case of an order request message, the request message reception and processing function of the new system A' 120 processes the order reception based on the session ID, the stock code, the figure, and the unit price or other information.

### <Step 222> Response message transmission

The response message transmission function of the new system A' 120 transmits the new response message to the test transition assistance system 110.

In the example of the online trade, it is assumed that the response message transmission function of the new online trade system, which is the new system A' 120, transmits the new response message to the test transition assistance system 110. More specifically, in the case of an order reception response message, it includes the session ID, the stock code, the figure, and the unit price or other information. However, the message may not include all of the information.

### <Step 217> Response message reception

The message transmission and reception function 114 of the test transition assistance system 110 receives the new response message from the new system A' 120.

In the example of the online trade, it is assumed that the message transmission and reception function 114 of the test transition assistance system 110 receives the new response message from the new online trade system which is the new system A' 120.

### <Step 218> Untransmitted request message presence/absence determination

The message transmission and reception function 114 of the test transition assistance system 110 determines the presence or absence of untransmitted request messages, and if "present", returns to <Step 216>, and if "absent", moves to <Step 219>.

In the example of the online trade, it is assumed that the message transmission and reception function 114 of the test transition assistance system 110 determines the presence or absence of untransmitted request messages. In this case, it is determined to be present after the transmission from the first request message to 99^{th} request message, so that the message transmission and reception function 114 returns to <Step 216>. While it is determined to be absent after the transmission of the 100^{th} request message, so that the message transmission and reception function 114 moves to <Step 219>.

### <Step 219> Message comparison

Hereinafter, the message comparison 219 will be described using the detailed message comparison flow chart shown in Fig. 4.

### <Step 401> One message comparison

The message comparison function 115 of the test transition assistance system 110 performs one message comparison based on the message process setting 800, the message conversion table 900, and the message comparison setting 1000.

In the example of the online trade, it is assumed that the message comparison function 115 of the test transition assistance system 110 performs one message text comparison by referring to the message conversion table 900 and the one message comparison "necessary (1)" in the message comparison setting 1000, based on the message conversion table path "PathMTT" in the message process setting 800. In this case, an example of the message comparison results is shown in the message comparison result 1100, and particularly in the one message difference (OldRes) 1103 and the one message difference (NewRes) 1104. Further, conversion between the current response message and a new response message of the message conversion table 900 as well as line head string and tag which are not to be compared by the message comparison setting 1000, commented out with (#), can also be set. An example of the message comparison results after removing the comment out (#) is shown in the message comparison result 1200, and particularly in the one message difference (OldRes) 1203 and in the one message difference (NewRes) 1204. The conversion of the current response message and the new response message in the message conversion table 900 can be used in <Step 302> of the one message conversion in which the new response message after conversion is generated in advance, or can be used for the comparison in <Step 401> of the one message comparison.

### <Step 402> One message time comparison

The message comparison function 115 of the test transition assistance system 110 performs the one message time comparison based on the message comparison setting 1000.

In the example of the online trade, it is assumed that the message comparison function 115 of the test transition assistance system 110 performs one message response time comparison, and the like, by referring to the one message time comparison "necessary (1)" in the message comparison setting 1000 of the test transition assistance system 110. In this case, an example of the message comparison results is shown in the message comparison result 1100, and particularly in the one message time (Old) 1105 and the one message time (New) 1106.

### <Step 403> Message relations comparison

The message comparison function 115 of the test transition assistance system 110 performs the comparison of a plurality of message relations based on the message comparison setting 1000.

In the example of the online trade, it is assumed that the message comparison function 115 of the test transition assistance system 110 performs the comparison of a plurality of message order relations, and the like, by referring to the message relations comparison "necessary (1)" in the message comparison setting 1000 of the test transition assistance system 110. In this case, an example of the message comparison results is shown in the message comparison result 1300.

### <Step 404> Message times comparison

The message comparison function 115 of the test transition assistance system 110 performs the comparison of a plurality of message times based on the message comparison setting 1000.

In the example of the online trade, it is assumed that the message comparison function 115 of the test transition assistance system 110 performs the comparison of a plurality of message average response times, and the like, by referring to the message times comparison "necessary (1)" in the message comparison setting 1000 of the test transition assistance system 110. In this case, an example of the message comparison results is shown in the message comparison result 1100, and particularly in the summary of one message time (Old) (average) 1108 and in the summary of one message time (New) (average) 1109.

### <Step 405> Message storage

The message comparison function 115 of the test transition assistance system 110 stores the new response message received from the new system A' 120, in the storage and the like as the message information' 600.

In the example of the online trade, it is assumed that the message comparison function 115 of the test transition assistance system 110 stores the new response message received from the new online trade system, which is the new system A' 120, in the storage and the like as the message information' 600.

### <Step 406> Message comparison result storage

The message comparison function 115 of the test transition assistance system 110 stores the message compassion results in the storage, and the like, as the message information' 600.

In the example of the online trade, it is assumed that the message comparison function 115 of the test transition assistance system 110 stores the message comparison results in the storage, and the like, as the message comparison results 1100, 1200, and 1300.

As described above, according to the this embodiment, the test transition system includes the steps of: acquiring a request message and a response message from the current system by a packet capture and the like; applying a process such as addition of an identifier and acquisition time; storing the message information in a storage and the like; applying processes, in non-real-time, such as reading of the stored message information, conversion of the message corresponding to a new system, and adjustment of the time to control the number of request message transmissions per load and per unit time; transmitting the request message to the new system; receiving the response message; and comparing the old and new response messages and response times, as well as a plurality of message relations and orders, or other information. Thus, in the test transition assistance, it is possible to provide a method and system, based on the non-real-time test, capable of supporting an old and new verification test and a load test, and the like, for the transition from the current system to the new system in order to reduce the number of days and man-hours and to improve the quality, and thus assisting the transition.

Further, there are the following configurations: (1) in the message relations adjustment, the response time is checked by reducing the current request transmission interval at a constant rate to increase the load for the load (nonfunctional) test, or the total request transmission and test time is reduced with a fixed transmission interval for the old and new verification (functional) test; (2) in the one message conversion and the message relations adjustment, the conversion and adjustment are added in terms of the security (cyber-attack) test; and (3) in the message comparison result storage, the response time change rate and the resource use change in the current and new messages, are stored and visualized.

A preferred embodiment of the present invention has been described under the assumption that the current system B 130 is the Web client of a securities company, and that the new system A' 120 and the current system A 140 are the online systems, respectively. For example, this can be applied to the corporate information systems in the industry sectors such as finance, manufacturing, distribution, public service, and communication. Further, the present invention can also be applied to other tests in addition to the "test for transition" that has been described above.

Further, Fig. 1 shows the configuration in which one test transition assistance system 110, one new system A' 120, one current system B 130, and one current system A 140 are provided. However, a plurality of test transmission assistance systems 110, a plurality of new systems A' 120, a plurality of current systems B 130, and a plurality of current systems A 140 can also be provided.

## Claims

1. A test transition assistance method using a test transition assistance system (110) connecting, through a network, to a current system (130, 140) for processing a variety of information as well as a new system (120), which is a target of the transition from the current system (130, 140),
wherein the current system (130, 140) performs a step of transmitting a request message (231) and a step of receiving a response message (232), or performs a step of receiving and processing a request message (241) and a step of transmitting a response message (242), or perform the both,
wherein the new system (120) performs a step of receiving and processing a new request message from the test transition assistance system (110) and a step of transmitting a response message to the test transition assistance system (110), and
wherein the test transition assistance system (110) performs the steps of:
acquiring one or more request messages transmitted from or received by the current system (130, 140);
processing and storing each request message as message information (500);
acquiring one or more response messages transmitted from or received by the current system (130, 140);
processing and storing each response message as message information (500);
reading and processing the stored message information (500);
transmitting a series of test request messages generated during processing of the message information to the new system (120); receiving a response message from the new system (120); and
comparing (219) the stored response message with the response message received from the new system (120); the method being **characterised in that**
the transmission interval between new request message transmissions is reduced by a constant rate from the initial interval value between request messages transmitted to the current system.

2. The test transition assistance method according to claim 1,
wherein, in the message read and process step (215), based on a setting, the test transition assistance system (110) reads the stored message information (500), converts the message information, further adjusts a plurality of message relations in the message information, and stores the new
request messages to be transmitted to the new system.

3. The test transition assistance method according to claim 1,
wherein, in the message comparison step (219), based on a setting, the test transition assistance system (110) compares the message body and the response time for each message, further compares a plurality of message relations and response times of a plurality of messages, and stores the messages and the message comparison results.

4. The test transition assistance method according to claim 1,
wherein the test transition assistance system (110) includes a storage device for storing the message information (500), the various settings, a message conversion table, and the message comparison results.

5. The test transition assistance method according to claim 1,
wherein a plurality of the current systems (130, 140), a plurality of the new systems (120), and a plurality of the test transition assistance systems (110) are provided, and
wherein the individual systems are connected to each other through a network (150).

6. A test transition assistance system (110) connecting, through a network, to a current system (130, 140) for processing a variety of information, as well as a new system (120), which is a target of the transition from the current system (130, 140) comprising:
a message acquisition function (111) configured to acquire one or more request messages and one or more response messages from the current system (130, 140);
a message process and storage function (112) configured to process and store each request message and each response message as message information;
a message read and process function (113) configured to read and process the stored message information;
a message transmission and reception function (114) configured to transmit a series of new request messages generated during processing of the message information to the new system (120); a message comparison function configured to compare the read and processed response message with the response message received from the new system (120);
the system being **characterised in that**
the transmission interval between new request message transmissions is reduced by a constant rate from the initial interval value between request messages transmitted to the current system.

7. The test transition assistance system (110) according to claim 6,
wherein, in the message read and process function, the test transition assistance system (110) is configured to read the stored message information, convert the message information, further adjust a plurality of message relations in the message information, and store the new request messages to be transmitted to the new system.

8. The test transition assistance system (110) according to claim 6,
wherein, in the message comparison function, the test transition assistance system (110) is configured to compare the message body with the response time for each message, further compare a plurality of message relations with response times of a plurality of messages, and store the messages and message comparison results.

9. The test transition assistance system (110) according to claim 6, comprising a storage device configured to store the message information, various settings, a message conversion table, and the message comparison results.

10. The test transition assistance system (110) according to claim 6,
wherein a plurality of the current systems (130, 140), a plurality of the new systems (120), and a plurality of the test transition assistance systems (110) are provided, and
wherein the individual systems are connected to each other through a network (150).

## Patentansprüche

1. Ein Testübertragungs-Assistenzverfahren, das ein Testübertragungs-Assistenzsystem (110) nutzt, welches über ein Netzwerk mit einem aktuellen System (130, 140) verbunden ist, um eine Vielzahl von Informationen zu verarbeiten, sowie mit einem neuen System (120), das ein Ziel der Übertragung des aktuellen Systems (130, 140) ist,
wobei das aktuelle System (130, 140) einen Schritt des Sendens einer Anforderungsnachricht (231) und einen Schritt des Empfangens einer Antwortnachricht (232) ausführt oder einen Schritt des Empfangens und Verarbeitens einer Anforderungsnachricht (241) und einen Schritt des Sendens einer Antwortnachricht (242) ausführt oder beides ausführt,
wobei das neue System (120) einen Schritt des Empfangens und Verarbeitens einer neuen Anforderungsnachricht von dem Testübertragungs-Assistenzsystem (110) und einen Schritt des Sendens einer Antwortnachricht an das Testübertragungs-Assistenzsystem (110) ausführt und wobei das Testübertragungs-Assistenzsystem (110) die folgenden Schritte ausführt:
Erfassen einer oder mehrerer Anforderungsnachrichten, die von dem aktuellen System (130, 140) empfangen oder versandt wurden;
Verarbeiten und Speichern jeder der Anforderungsnachrichten als Nachrichteninformation (500);
Erfassen einer oder mehrerer Antwortnachrichten aus dem aktuellen System (130, 140);
Verarbeiten und Speichern jeder der Antwortnachrichten als Nachrichteninformation (500);
Lesen und Verarbeiten der gespeicherten Nachrichteninformation (500);
Senden einer Reihe von Test-Anforderungsnachrichten, die während der Verarbeitung der Nachrichteninformation erzeugt werden, an das neue System (120);
Empfangen einer Antwortnachricht vom neuen System (120); und
Vergleichen (219) der gespeicherten Antwortnachricht mit der Antwortnachricht, die von dem neuen System (120) empfangen wurde;
wobei das Verfahren **dadurch gekennzeichnet ist, dass** das Sendeintervall zwischen Sendevorgängen der neuen Anforderungsnachrichten ausgehend vom Wert des Anfangsintervalls zwischen an das neue System versandten Anforderungsnachrichten mit einer konstanten Rate reduziert wird.

2. Testübertragungs-Assistenzverfahren nach Anspruch 1, wobei in dem Nachrichten-Lese- und -Verarbeitungsschritt (215) abhängig von einer Einstellung das Testübertragungs-Assistenzsystem (110) die gespeicherte Nachrichteninformation (500) liest, die Nachrichteninformation konvertiert, ferner eine Mehrzahl von Nachrichtenbeziehungen in der Nachricht anpasst und die neuen, an das neue System zu versendenden Anforderungsnachrichten speichert.

3. Testübertragungs-Assistenzverfahren nach Anspruch 1, wobei in dem Nachrichten-Vergleichsschritt (219) abhängig von einer Einstellung das Testübertragungs-Assistenzsystem (110) den Nachrichteninhalt und die Antwortzeit für jede Nachricht vergleicht, ferner eine Mehrzahl von Nachrichtenbeziehungen und Reaktionszeiten für mehrere Nachrichten vergleicht, und die Nachrichten und Vergleichsergebnisse speichert.

4. Testübertragungs-Assistenzverfahren nach Anspruch 1, wobei das Testübertragungs-Assistenzsystem (110) eine Speichervorrichtung zum Speichern der Nachrichteninformation (500), der verschiedenen Einstellungen, einer Nachrichtenumwandlungstabelle und der Nachrichten-Vergleichsergebnisse umfasst.

5. Testübertragungs-Assistenzverfahren nach Anspruch 1, wobei mehrere der aktuellen Systeme (130, 140), mehrere der neuen Systeme (120) und mehrere der Testübertragungs-Assistenzsysteme (110) bereitgestellt werden und wobei die einzelnen Systeme über ein Netzwerk (150) miteinander verbunden sind.

6. Ein Testübertragungs-Assistenzsystem (110), das zur Verarbeitung einer Vielzahl von Informationen über ein Netzwerk mit einem aktuellen Systemen (130, 140) sowie mit einem neuen System (120) verbinden ist, welches ein Ziel der Übertragung von dem aktuellen System (130, 140) ist, umfassend:
eine Nachrichtenerfassungsfunktion (111), die zum Erfassen einer oder mehrerer Anforderungsnachrichten und einer oder mehrerer Antwortnachrichten von dem aktuellen System (130, 140) ausgelegt ist;
eine Nachrichtenverarbeitungs- und Speicherfunktion (112), die zum Verarbeiten und Speichern der Anforderungsnachricht und der Antwortnachricht ausgelegt ist;
eine Nachrichten-Lese- und -Verarbeitungsfunktion (113), die zum Lesen und Verarbeiten der gespeicherten Nachrichteninformation ausgelegt ist;
eine Nachrichten-Sende- und -Empfangsfunktion (114), die zum Übertragen einer Reihe von neuen Anforderungsnachrichten an das neue System (120) ausgelegt ist, welche während der Verarbeitung der Nachrichteninformation erzeugt werden;
eine Nachrichtenvergleichsfunktion, die zum Vergleichen der gelesenen und verarbeiteten Antwortnachricht mit der Antwortnachricht, die von dem neuen System (120) empfangen wurde, ausgelegt ist;
wobei das System **dadurch gekennzeichnet ist, dass** das Sendeintervall zwischen Sendevorgängen der neuen Anforderungsnachrichten ausgehend vom Wert des Anfangsintervalls zwischen an das neue System versandten Anforderungsnachrichten mit einer konstanten Rate reduziert wird.

7. Testübertragungs-Assistenzsystem (110) nach Anspruch 6, wobei in der Nachrichten-Lese- und -Verarbeitungsfunktion das Testübertragungs-Assistenzsystem (110) dazu ausgelegt ist, die gespeicherte Nachrichteninformation zu lesen, die Nachrichteninformation umzuwandeln, ferner eine Vielzahl von Nachrichtenbeziehungen anzupassen, und die neuen, an das neue System zu versandten Anforderungsnachrichten zu speichern.

8. Testübertragungs-Assistenzsystem (110) nach Anspruch 6, wobei in der Nachrichten-Vergleichsfunktion das Testübertragungs-Assistenzsystem (110) dazu ausgelegt ist, den Nachrichteninhalt mit der Antwortzeit für jede Nachricht zu vergleichen, ferner eine Mehrzahl von Nachrichtenbeziehungen mit Reaktionszeiten für mehrere Nachrichten zu vergleichen und die Nachrichten und Vergleichsergebnisse zu speichern.

9. Testübertragungs-Assistenzsystem (110) nach Anspruch 6, umfassend eine Speichervorrichtung zum Speichern der Nachrichteninformation, der verschiedenen Einstellungen, einer Nachrichtenumwandlungstabelle und der Nachrichten-Vergleichsergebnisse.

10. Testübertragungs-Assistenzsystem (110) nach Anspruch 6, wobei mehrere der aktuellen Systeme (130, 140), mehrere der neuen Systeme (120) und mehrere der Testübertragungs-Assistenzsysteme (110) bereitgestellt sind und
wobei die einzelnen Systeme über ein Netzwerk (150) miteinander verbunden sind.

## Revendications

1. Procédé d'aide à la transition de test utilisant un système d'aide à la transition de test (110) relié, au travers d'un réseau, à un système actuel (130, 140) pour traiter une variété d'informations ainsi qu'à un nouveau système (120), qui est une cible de la transition à partir du système actuel (130, 140),
dans lequel le système actuel (130, 140) effectue une étape de transmission d'un message de requête (231) et une étape de réception d'un message de réponse (232), ou effectue une étape de réception et de traitement d'un message de requête (241) et une étape de transmission d'un message de réponse (242), ou effectue les deux,
dans lequel le nouveau système (120) effectue une étape de réception et de traitement d'un nouveau message de requête provenant du système d'aide à la transition de test (110) et une étape de transmission d'un message de réponse au système d'aide à la transition de test (110), et
dans lequel le système d'aide à la transition de test (110) effectue les étapes de :
acquisition d'un ou plusieurs messages de requête transmis ou reçus par le système actuel (130, 140) ;
traitement et stockage de chaque message de requête en tant qu'informations de message (500) ;
acquisition d'un ou plusieurs messages de réponse transmis ou reçus par le système actuel (130, 140) ;
traitement et stockage de chaque message de réponse en tant qu'informations de message (500) ;
lecture et traitement des informations de message stockées (500) ;
transmission d'une série de messages de requête de test générés lors du traitement des informations de message au nouveau système (120) ;
réception d'un message de réponse du nouveau système (120) ; et
comparaison (219) du message de réponse stocké avec le message de réponse reçu du nouveau système (120) ;
le procédé étant **caractérisé en ce que**
l'intervalle de transmission entre les transmissions des nouveaux messages de requête diminue d'un taux constant par rapport à la valeur d'intervalle initiale entre les messages de requête transmis au système actuel.

2. Procédé d'aide à la transition de test selon la revendication 1,
dans lequel, lors de l'étape de lecture et de traitement des messages (215), sur la base d'un réglage, le système d'aide à la transition de test (110) lit les informations de message stockées (500), convertit les informations de message, règle en outre une pluralité de relations de message dans les informations de message, et stocke les nouveaux messages de requête devant être transmis au nouveau système.

3. Procédé d'aide à la transition de test selon la revendication 1,
dans lequel, lors de l'étape de comparaison des messages (219), sur la base d'un réglage, le système d'aide à la transition de test (110) compare le corps de message et le temps de réponse de chaque message, compare en outre une pluralité de relations de messages et les temps de réponse d'une pluralité de messages, et stocke les messages et les résultats de comparaison des messages.

4. Procédé d'aide à la transition de test selon la revendication 1,
dans lequel le système d'aide à la transition de test (110) inclut un dispositif de stockage destiné à stocker les informations de message (500), les divers réglages, une table de conversion de message, et les résultats de comparaison des messages.

5. Procédé d'aide à la transition de test selon la revendication 1,
dans lequel une pluralité des systèmes actuels (130, 140), une pluralité des nouveaux systèmes (120) et une pluralité des systèmes d'aide à la transition de test (110) sont prévus, et
dans lequel les systèmes individuels sont reliés les uns aux autres au travers d'un réseau (150).

6. Système d'aide à la transition de test (110) relié, au travers d'un réseau, à un système actuel (130, 140) pour traiter des informations diverses, ainsi qu'à un nouveau système (120) qui est une cible de la transition à partir du système actuel (130, 140), comprenant :
une fonction d'acquisition de messages (111) conçue pour acquérir un ou plusieurs messages de requête et un ou plusieurs messages de réponse provenant du système actuel (130, 140) ;
une fonction de traitement et de stockage de messages (112) conçue pour traiter et stocker chaque message de requête et chaque message de réponse en tant qu'informations de message ;
une fonction de lecture et de traitement de messages (113) conçue pour lire et traiter les informations de message stockées ;
une fonction de transmission et de réception de messages (114) conçue pour transmettre une série de nouveaux messages de requête générés lors du traitement des informations de message au nouveau système (120) ;
une fonction de comparaison de messages conçue pour comparer le message de réponse lu et traité avec le message de réponse reçu du nouveau système (120) ;
le système étant **caractérisé en ce que**
l'intervalle de transmission entre les transmissions des nouveaux messages de requête diminue d'un taux constant par rapport à la valeur d'intervalle initiale entre les messages de requête transmis au système actuel.

7. Système d'aide à la transition de test (110) selon la revendication 6,
dans lequel, dans la fonction de lecture et de traitement des messages, le système d'aide à la transition de test (110) est conçu pour lire les informations de message stockées, convertir les informations de message, régler en outre une pluralité de relations de message dans les informations de message, et stocker les nouveaux messages de requête devant être transmis au nouveau système.

8. Système d'aide à la transition de test (110) selon la revendication 6,
dans lequel, dans la fonction de comparaison des messages, le système d'aide à la transition de test (110) est conçu pour comparer le corps de message avec le temps de réponse pour chaque message, comparer en outre une pluralité de relations de messages avec les temps de réponse d'une pluralité de messages, et stocker les messages et les résultats de comparaison des messages.

9. Système d'aide à la transition de test (110) selon la revendication 6, comprenant un dispositif de stockage conçu pour stocker les informations de message, diverses valeurs, une table de conversion de message, et les résultats de comparaison des messages.

10. Système d'aide à la transition de test (110) selon la revendication 6,
dans lequel une pluralité des systèmes actuels (130, 140), une pluralité des nouveaux systèmes (120) et une pluralité des systèmes d'aide à la transition de test (110) sont prévus, et
dans lequel les systèmes individuels sont reliés les uns aux autres au travers d'un réseau (150).
